(19) Europäisches Patentamt
European Patent Office
Office européen des brevets

(11) **EP 4 567 738 A1**

(12) **EUROPEAN PATENT APPLICATION**
published in accordance with Art. 153(4) EPC

(43) Date of publication:
**11.06.2025 Bulletin 2025/24**

(21) Application number: **23851891.4**

(22) Date of filing: **09.08.2023**

(51) International Patent Classification (IPC):
**G06T 17/00** (2006.01)

(86) International application number:
**PCT/CN2023/112049**

(87) International publication number:
**WO 2024/032670 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202210956350**

(71) Applicant: **Shining 3D Tech Co., Ltd.**
**Hangzhou, Zhejiang 311258 (CN)**

(72) Inventors:
• **CHEN, Han**
**Hangzhou, Zhejiang 311258 (CN)**
• **ZHAO, Xiaobo**
**Hangzhou, Zhejiang 311258 (CN)**
• **ZHANG, Jian**
**Hangzhou, Zhejiang 311258 (CN)**
• **HUANG, Leijie**
**Hangzhou, Zhejiang 311258 (CN)**
• **MA, Chao**
**Hangzhou, Zhejiang 311258 (CN)**

(74) Representative: **Dehns Germany Partnerschaft mbB**
**Theresienstraße 6-8**
**80333 München (DE)**

(54) **THREE-DIMENSIONAL RECONSTRUCTION METHOD, APPARATUS AND SYSTEM**

(57) Disclosed in the present application are a method, apparatus and system for three-dimensional reconstruction. The method includes: acquiring a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes; acquiring a first target pixel point of each code element in the first image, and determining, in the second image, a matched pixel point for the first target pixel point of each code element in the first image; and determining the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

Fig. 2

A first image and a second image is acquired, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes — S202

A first target pixel point of each code element in the first image is acquired, and a matched pixel point for the first target pixel point of each code element in the first image is determined in the second image — S204

The three-dimensional coordinates of the first target pixel point at least is determined according to the predetermined pixel point coordinates of the first target pixel point in the first image and the predetermined pixel point coordinates of the matched pixel point in the second image, so as to complete three-dimensional reconstruction — S206

## Description

### Cross-Reference to Related Application

The present application claims priority to Chinese Patent Application No. 202210956350.X, to the China National Intellectual Property Administration on 10 August 2022 and entitled " Method, Apparatus and System for Three-Dimensional Reconstruction ", which is incorporated herein by reference in its entirety.

### Technical Field

The present application relates to the field of three-dimensional reconstruction, and in particular, to a method, apparatus and system for three-dimensional reconstruction.

### Background

The structured light three-dimensional reconstruction technology is a three-dimensional reconstruction technology that projects an optical encoding pattern to the surface of an object to be measured and restores three-dimensional data of the surface of the object by using a collected deformation pattern. The present invention has the characteristics of high efficiency, anti-interference, etc., and is widely applied to various three-dimensional reconstruction scenarios. The core problem in the structured light three-dimensional reconstruction technology is homologous pixel point matching. Different matching policies depend on different encoding modes. According to different encoding modes of the projection pattern, the structured light technology may be classified into temporal encoding and spatial encoding. The temporal encoding needs to project multiple frames of patterns to a time sequence in a measurement scene, and generally requires that an object to be measured and a projector are relatively static; therefore, scanning at a high frame rate cannot be implemented, and it is applied to limited scenes to a certain extent, and is mostly used in static scanning scenes. The spatial encoding generally only needs to project a pattern to a measured scene to complete three-dimensional reconstruction. Currently, in the relevant art, decoding is performed using a relative displacement relationship of neighborhood code elements by means of an encoding method of circular code elements, and another method is to obtain three-dimensional data by means of matching between image blocks; in the former mode, the code elements have a relatively small encoding capacity, and only sparse code element points can be reconstructed, so that there are few single-frame data and the scanning efficiency is low; in the latter mode, matching is performed by using image blocks, so that the precision is low.
In view of the described problems, no effective solution has been proposed yet.

### Summary

The embodiments of the present application provide a three-dimensional reconstruction method, apparatus and system, so as to at least solve the technical problem of low accuracy in performing matching on code elements on the basis of feature points due to unclear images.
According to one aspect of the embodiments of the present application, provided is a method for three-dimensional reconstruction, comprising: acquiring a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes; acquiring a first target pixel point of each code element in the first image, and determining, in the second image, a matched pixel point for the first target pixel point of each code element in the first image; and determining the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.
In some embodiments of the present application, determining, in the second image, the matched pixel point for the first target pixel point of each code element in the first image includes: determining the pixel point coordinates of the first target pixel point and a gray-scale value of the first target pixel point; determining a first region with a preset area in the first image, and taking a central point of the first region as the first target pixel point; determining a second region with the preset area from the second image, wherein the longitudinal coordinate of the center of the second region in the second image is the same as the longitudinal coordinate of the center of the first region in the first image; and determining, from the second region, matched pixel points matching the first target pixel point.
In some embodiments of the present application, determining, from the second region, matched pixel points matching the first target pixel point includes: determining the correlation coefficient of each pixel point in the second region one by one, the correlation coefficient being used for representing a correlation between a pixel point in the second region and the first target pixel point; and determining a pixel point having the maximum correlation coefficient in the second region as the matched pixel point.

In some embodiments of the present application, determining the correlation coefficient of each pixel point in the second region one by one includes: determining an average gray-scale value of all pixel points in the first region as a first average gray-scale value, and determining an average gray-scale value of all pixel points in the second region as a second average gray-scale value; and determining a correlation coefficient between each pixel point in the second region and the first target pixel point according to a difference between the gray-scale value of the first target pixel point in the first region and the first average gray-scale value and a difference between the gray-scale value of each pixel point in the second region and the second average gray-scale value.

In some embodiments of the present application, determining the pixel point having the maximum correlation coefficient in the second region as the matched pixel point includes: determining a pixel point having the maximum correlation coefficient in the second region as a candidate matched point; and in cases where the candidate matched point overlaps the second target pixel point in the second image, determining the candidate matched point as the matched pixel point. In cases where the candidate matched point does not overlap the second target pixel point in the second image, determining the second target pixel in a preset range around the candidate matched point as the matched pixel point.

In some embodiments of the present application, the predetermined code element image comprising a plurality of target code elements that are randomly distributed in a preset direction, the target code elements being line segment stripes, includes: determining, on the basis of the length of the target code element, the width of the target code element, the spacing between the target code elements, and the pixel point coordinates of a central pixel point of the target code element, a target region where the target code element is located, wherein the pixel point coordinates of the central pixel point of the target code element are randomly generated in the region where the code element image is located; traversing all pixel points in the target region, and generating the target code element in the target region in cases where there is no described target code element in the target region, wherein the target code element at least includes a line segment of a preset length and two end points corresponding to the line segment of the preset length; and generating the target code element at all the target regions within the code element image region.

In some embodiments of the present application, the method further includes: determining a first neighborhood code element set of any code element in the first image and a plurality of second neighborhood code element set of a plurality of candidate code elements in the second image; determining the number of matched neighborhood code elements in the plurality of second adjacent code element sets and the number of matched neighborhood code elements in the first neighborhood code element set, and determining, as a target second neighborhood code element set, a second neighborhood code element set having the maximum number of matched neighborhood code elements in the plurality of second neighborhood code element sets; and determining the candidate code element corresponding to the target second neighborhood code element set as the target code element.

In some embodiments of the present application, the method further includes: determining a plurality of first target pixel points in the first image and a plurality of second target pixel points in the second image; and matching the plurality of first target pixel points with the plurality of second target pixel points in the second image on a one-to-one basis.

According to another aspect of the embodiments of the present application, further provided is an apparatus for three-dimensional reconstruction, comprising: an acquisition module, configured to acquire a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes; a matching module configured to acquire a first target pixel point of each code element in the first image, and determine, in the second image, a matched pixel point for the first target pixel point of each code element in the first image; and a reconstruction module, configured to determine the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

According to another aspect of the embodiments of the present application, further provided is a system for three-dimensional reconstruction, which is applied to a three-dimensional reconstruction method and characterized by comprising: at least two image collection devices, a projection device and a first processor, wherein the projecting device is configured to project a predetermined code element image onto the surface of an object to be measured; the at least two image acquisition modules are configured to acquire the predetermined code element images from the surface of the object to be measured, so as to obtain a first image and a second image; and the first processor is configured to acquire a first target pixel point of each code element in the first image, and determine, in the second image, a matched pixel point for the first target pixel point of each code element in the first image; and is further configured to determine the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

According to still another aspect of the embodiments of the present application, further provided is a non-transitory storage medium, wherein the non-transitory storage medium includes a stored program, and when the program runs, a device where the non-transitory storage medium is located is controlled to execute the method for three-dimensional reconstruction.

According to still another aspect of the embodiments of the present application, further provided is an electronic device, comprising a memory and a processor; the processor is configured to run a program, wherein the program executes the method for described three-dimensional reconstruction when running.

By means of the method of: acquiring a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes; acquiring a first target pixel point of each code element in the first image, and determining, in the second image, a matched pixel point for the first target pixel point of each code element in the first image; and determining the three-dimensional coordinates of the first target pixel point at least according to the predetermined pixel point coordinates of the first target pixel point in the first image and the predetermined pixel point coordinates of the matched pixel point in the second image, to complete three-dimensional reconstruction, the embodiments of the present application achieve the purpose of replacing code element feature point encoding mode, so as to achieve the technical effect of improving the accuracy rate of matching of the code elements, thereby solving the technical problem of low accuracy in performing matching on code elements on the basis of feature points due to unclear images.

## Brief Description of the Drawings

Drawings described herein are used to provide a further understanding of the application and constitute a part of the application. The exemplary embodiments of the application and the description thereof are used to explain the application, but do not constitute improper limitations to the application. In the drawings:

Fig. 1 is a hardware structural block diagram of a computer terminal (or mobile device) for a method for three-dimensional reconstruction according to some embodiments of the present application;

Fig. 2 is a schematic diagram of a three-dimensional reconstruction method according to the present application;

Fig. 3 is a schematic diagram of an optional encoding pattern according to some embodiments of the present application;

Fig. 4 is a schematic diagram of five optional code element shapes according to some embodiments of the present application;

Fig. 5 is an optional three-dimensional reconstruction system according to some embodiments of the present application;

Fig. 6 is an optional three-dimensional reconstruction apparatus according to some embodiments of the present application.

The drawings include the following reference signs:

501: object to be measured; 502: first processor; 503: image acquisition device; 504: projection device.

## Detailed Description of the Embodiments

In order to make the solutions of the application better understood by those skilled in the art, the technical solutions in the embodiments of the application will be clearly and completely described below in combination with the drawings in the embodiments of the application. It is apparent that the described embodiments are not all embodiments but part of embodiments of the application. All other embodiments obtained by those of ordinary skill in the art on the basis of the embodiments in the application without creative work shall fall within the scope of protection of the

It is to be noted that terms "first", "second" and the like in the description, claims and the above-mentioned drawings of the application are used for distinguishing similar objects rather than describing a specific sequence or a precedence order. It should be understood that the data so used may be interchanged where appropriate so that the embodiments of the present application described herein can be implemented in sequences other than those illustrated or described herein. In addition, the terms "include" and "have", and any variations thereof are intended to cover a non-exclusive inclusion, for example, a process, method, system, product, or device that includes a series of steps or units is not necessarily limited to those steps or units that are clearly listed, but may include other steps or units that are not clearly listed or inherent to such process, method, product, or device.

According to some embodiments of the present application, some embodiments of a method for model training are further provided. It should be noted that the steps shown in the flowchart of the drawings can be executed in a computer system such as a set of computer executable instructions. Although the logic order is shown in the flowchart, in some cases, the shown or described steps can be executed in an order different from that described here.

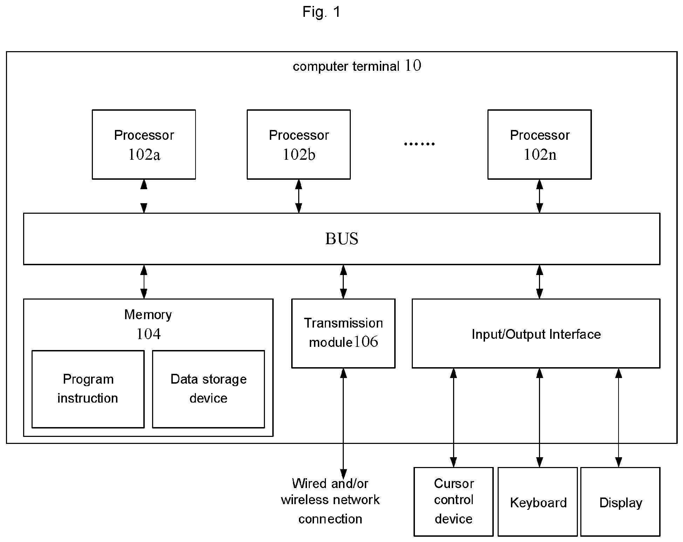

The method embodiments provided in the embodiments of the present application may be executed in a mobile terminal, a computer terminal, cloud server, or a similar computing device. Fig. 1 is a hardware structural block diagram of a computer terminal (or mobile device) for a three-dimensional reconstruction method. As shown in Fig. 1, the computer terminal 10 (or mobile device 10) may include one or more processors 102 (shown in the figures using 102a, 102b, ..., 102n) (the processors 102 may include but are not limited to a processing device such as a microprocessor (MCU) or a programmable logic device, FPGA), a memory 104 for storing data, and a transmission module 106 for communication functions. In addition, the computer terminal may also include a display, an input/output interface (I/O interface), a universal serial bus (USB) port (which may be included as one of the ports of the I/O interface), a network interface, a power supply, and/or a camera. A person of ordinary skill in the art would understand that the structure shown in Fig. 1 is merely exemplary, and does not limit the structure of the described electronic device. For example, the computer terminal 10 may also include more or fewer components than those shown in Fig. 1, or have different configurations from that shown in Fig. 1.

It should be noted that the one or more processors 102 and/or other data processing circuitry described above may be generally referred to herein as "data processing circuitry". The data processing circuit may be completely or partially embodied as software, hardware, firmware or any other combination. In addition, the data processing circuit may be a single independent processing module, or may be completely or partially combined into any one of the other elements in the computer terminal 10 (or the mobile device). As involved in the embodiments of the present disclosure, the data processing circuit serves as a processor control (such as selection of a variable resistance terminal path connected with an interface).

The memory 104 can be used for storing software programs and modules of application software, such as program instructions/modules corresponding to the three-dimensional reconstruction method in the embodiments of the present application; and the processor 102 runs the software programs and modules stored in the memory 104, so as to execute various function applications and data processing, i.e. to implement the three-dimensional reconstruction method of the application program. The memory 104 may include a high-speed random access memory, and may also include a non-transitory memory, such as one or more magnetic storage apparatuses, flash memories, or other non-transitory solid-state memories. In some instances, the memory 104 may further include a memory remotely located from the processor 102, and the remote memory may be connected to the computer terminal 10 by a network. Examples of the network above includes, but is not limited to, an Internet, intranets, a local area network, a mobile communication network, and combinations thereof.

The transmission module 106 is configured to receive or transmit data by a network. Specific examples of the network may include a wireless network provided by a communication provider of the computer terminal 10. In an example, the transmission module 106 may include a network interface controller (NIC) that may be coupled to other network devices by a base station, so as to communicate with the Internet. In an example, the transmission module 106 can be a radio frequency (RF) module for communicating wirelessly with the Internet.

The display may be a touch screen type liquid crystal display (LCD). The LCD can enable a user to interact with a user interface of the computer terminal 10 (or the mobile device).

According to some embodiments of the present application, some embodiments of a method for three-dimensional reconstruction is further provided. It should be noted that the steps shown in the flowchart of the drawings can be executed in a computer system such as a set of computer executable instructions. Although the logic order is shown in the flowchart, in some cases, the shown or described steps can be executed in an order different from that described here.

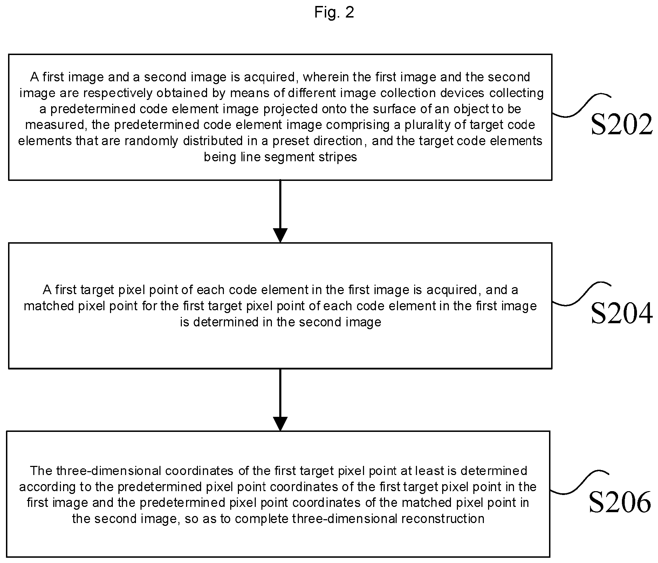

Fig. 2 is a flowchart of a three-dimensional reconstruction method according to some embodiments of the present application. As shown in Fig. 2, the method includes the following steps:

step S202: a first image and a second image is acquired, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes;

step S204: a first target pixel point of each code element in the first image is acquired, and a matched pixel point for the first target pixel point of each code element in the first image is determined in the second image; and

step S206: the three-dimensional coordinates of the first target pixel point at least is determined according to the predetermined pixel point coordinates of the first target pixel point in the first image and the predetermined pixel point coordinates of the matched pixel point in the second image, so as to complete three-dimensional reconstruction.

By means of the described steps, the purpose of replacing an encoding mode of a feature point of a code element can be realized by an encoding method for determining matched pixel points of a first target pixel point of each code element in a first image in a second image can be realized, thereby achieving the technical effect of improving the matching accuracy rate of the code element, thereby solving the technical problem of low accuracy of matching a code element according to a feature point of the code element due to an unclear image.

It needs to be noted that three-dimensional reconstruction refers to establishing a mathematical model suitable for computer representation and processing for a three-dimensional object, which is the basis for processing, operating and analyzing the property of the three-dimensional object in a computer environment, and is also a virtual reality technology for establishing and expressing an objective event in a computer. The structured-light temporal encoding and spatial encoding technologies are usually used in a three-dimensional reconstruction technology, wherein the challenge in structured-light spatial encoding lies in utilizing pixel space gray-scale information to perform stable and reliable encoding and decoding on each pixel point, and one category of methods in related technologies involves encoding specific pixel points with certain code element information, encoding and decoding each code element by means of an encoding method of large and small circular code elements and by using an epipolar constraint condition and a relative displacement relationship between neighborhood code elements and the code elements in an image, so as to achieve reconstruction of each code element point. The disadvantages of this method lie in that the code element encoding capacity is limited, only sparse code element points can be reconstructed, there are less single-frame data, scanning efficiency is low, and it is greatly affected by the texture of the surface of the object. Another category of methods in related technologies involves performing homologous point matching using a random speckle pattern and the correlation between pixel point blocks, for example, projecting a pseudo-random speckle image onto the surface of an object to be measured by means of a projection device, and performing matching between image blocks by using an improved semi-global matching (SGM) algorithm, so as to obtain three-dimensional data of the surface of the object to be measured. The disadvantages of this method are that the image block suitable for matching has a large space, and the precision and details of the reconstructed data are poor, so that it is difficult to reconstruct a complex object. In the related art, code element matching is generally accomplished by matching feature points of a code element; however, in the case of poor image definition and a high degree of blurring of the feature points, the accuracy of feature point extraction will be reduced, resulting in reduced accuracy of code element matching.

In the method proposed in the present application, the encoding method of line segment stripe code elements is used to acquire a first target pixel point in a line segment stripe, for example, a midpoint of the line segment stripe. By means of performing matching by using a first target feature point of a code element, instead of using a method of performing matching by using a feature point of a code element, the accuracy of code element matching in case of an unclear image is further improved; and furthermore, since the encoding capacity is increased due to the usage of line segment stripe code elements, the data amount of a single image is increased, and the scanning efficiency is further improved. Furthermore, since the method proposed in the present application is line segment stripe distribution, the distribution density of the code elements is high, and the accuracy of the obtained reconstructed data is further improved.

The method provided in the present application can be applied to scanners, such as oral scanners, face scanners, industrial scanners and professional scanners, and can realize three-dimensional reconstruction of articles or scenes, such as teeth, faces, human bodies, industrial products, industrial devices, articles, art products, artificial limbs, medical devices and buildings.

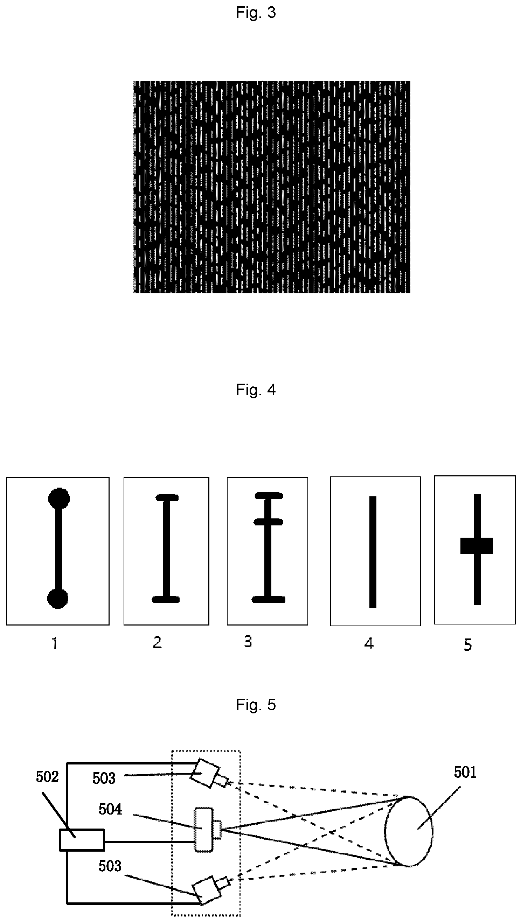

In step S202, a first image is an image collected by a first image collection device, and a second image is an image collected by a second image collection device; the orientations of a plurality of target code elements in the first image are the same, and the spacing between the code elements is randomly determined, for example, the spacing between a code element 1 and a code element 2 is 100 $\mu$m, and the spacing between the code element 2 and a code element 3 is 80 $\mu$m. The code element of the predetermined code element image randomly fluctuates upwards and downwards according to a horizontal direction (the direction of a electrode line of a camera) of an image, the feature of the code element includes at least two extractable patterns of greyscale feature points, and the feature points are distributed upwards and downwards at a preset spacing. Fig. 3 shows an optional code element image, and the code elements in the figure are randomly distributed in a vertical direction.

In step S204, the first target pixel point of each code element in the first image is acquired, and the matched pixel point for the first target pixel point of each code element in the first image is determined in the second image, it can be understood that the first image and the second image are obtained by different image collection devices by collecting projection images projected onto the surface of an object to be measured, and therefore, the code element structure in the first image is the same as the code element structure in the second image. Hence, taking the first target pixel point being the midpoint of the line segment in the first image as an example, the matched pixel point in the second image is the midpoint of the line segment in the second image.

In step S206, a first target pixel point in the first image corresponds to a matched pixel point in the second image on a one-to-one basis, and the three-dimensional coordinates of the first target pixel point are determined at least according to the pixel point coordinates of the first target pixel point in the first image and the pixel point coordinates of the corresponding matched pixel point in the second image, so as to complete reconstruction.

The following describes the foregoing step S202 to step S206 in details with reference to specific embodiments.

In step S204, the matched pixel point of the first target pixel point in the second image can be determined by using the pixel point coordinates and the gray-scale value of the pixel point, alternatively: determining the pixel point coordinates of the first target pixel point and a gray-scale value of the first target pixel point; determining a first region with a preset area in the first image, and taking a central point of the first region as the first target pixel point; determining a second region with the preset area from the second image, wherein the longitudinal coordinate of the center of the second region in the second image is the same as the longitudinal coordinate of the center of the first region in the first image; and determining, from the second region, matched pixel points matching the first target pixel point.

In an optional manner, the first region and the second region may be image regions having an image size of m x n, where m and n are pixel values.

It should be noted that, the vertical coordinates are pixel coordinates. It should be understood that, the vertical coordinates of the center of the second region in the second image are the same as the vertical coordinates of the center of the first region in the first image, which indicates that the distance from the center of the first region to the boundary of the first image in the preset direction is the same as the distance from the center of the second region to the same boundary of the second image in the preset direction.

In optional manners, the matched pixel point may be determined by comparing a correlation coefficient between a first target pixel point and each pixel point in a second region, for example, to determine a correlation coefficient of each pixel point in the second region one by one, the correlation coefficient being used for representing the correlation between the pixel point in the second region and the first target pixel point; and the pixel point with the maximum correlation coefficient in the second region is determined as the matched pixel point.

A correlation coefficient between each pixel point in the second region and the first target pixel point is determined in the following manner: first, determining an average gray-scale value of all pixel points in the first region as a first average gray-scale value, and determining an average gray-scale value of all pixel points in the second region as a second average gray-scale value; and determining a correlation coefficient between each pixel point in the second region and the first target pixel point according to a difference between the gray-scale value of the first target pixel point in the first region and the first average gray-scale value and a difference between the gray-scale value of each pixel point in the second region and the second average gray-scale value.

Alternatively, for the first target pixel point $(u^1, v^1)$ in the first image, the gray-scale value thereof is $I^1(u^1, v^1)$, and taking any pixel point as the center of the first region with the image size $m \times n$, the second region which is at the same pixel point row position as the first region is determined in the second image, the image size of the second region being $m \times n$. A correlation coefficient $\omega_i$ of each pixel point in the second region is computed one by one, where $i = 0, 1, W-1$, and W is a pixel point width of the first image. The computational equation of the correlation coefficient is as follows:

$$\omega = \frac{\sum_{u=0}^{m} \sum_{v=0}^{n} [I^1(u^1, v^1) - \bar{I}^1] \cdot [I^2(u^2, v^2) - \bar{I}^2]}{\sqrt{\sum_{u=0}^{m} \sum_{v=0}^{n} [I^1(u^1, v^1) - \bar{I}^1]^2} \cdot \sqrt{\sum_{u=0}^{m} \sum_{v=0}^{n} [I^2(u^2, v^2) - \bar{I}^2]^2}}$$

where m is a pixel point width of the first region, n is a pixel point height of the first region, $\bar{I}^1$ is an average gray-scale value of each pixel point in the first region, $\bar{I}^2$ is an average gray-scale value of each pixel point in the second region, $(u^2, v^2)$ are the pixel point coordinates of a pixel point, participating in correlation coefficient calculation, in the second image, and $I^2(u^2, v^2)$ is a gray-scale value of a pixel point, participating in the correlation coefficient calculation, in the second image.

It should be noted that, the correlation coefficient may be a zero mean normalized cross correlation (ZNCC) determined by using a ZNCC method for matching, and describes a degree of similarity between two different image blocks, wherein the higher the correlation coefficient, the higher the degree of similarity between the image blocks, the higher the possibility of being a matched point.

Taking the first target pixel point being the midpoint of the line segment stripe in the first image as an example, by means of the above steps, it is obvious that a candidate matched point (the pixel point with the maximum correlation coefficient) can be found in the second image for the midpoint of each line segment stripe in the first image; as the first target pixel point is the midpoint of the line segment stripe, the matched pixel point matching the first target pixel point in the second image may only be the midpoint of the line segment stripe in the second image; on the basis of the above principle, all the candidate matched points are traversed, and in cases where the candidate matched point overlaps the second target pixel point in the second image, the candidate matched point is determined as a matched pixel point. In cases where the candidate matched point does not overlap the second target pixel point in the second image, the second target pixel in a preset range around the candidate matched point is determined as the matched pixel point.

In other optional manners, after the matched pixel point is determined, a manner of using the first target pixel point as a feature point may further be used to determine, in the second image, any code element in the first image: determining a first neighborhood code element set of any code element in the first image and a plurality of second neighborhood code element set of a plurality of candidate code elements in the second image; determining the number of matched neighborhood code elements in the plurality of second adjacent code element sets and the number of matched neighborhood code elements in the first neighborhood code element set, and determining, as a target second neighborhood code element set, a second neighborhood code element set having the maximum number of matched neighborhood code elements in the plurality of second neighborhood code element sets; and determining the candidate code element corresponding to the target second neighborhood code element set as a code element matching any one of the described code elements.

Alternatively, the first neighborhood code element set is neighborhood code element sets of code elements in the second image, for example, taking a code element p in the second image being a line segment with a set length and two end points corresponding to the line segment as an example, the neighborhood code element set of the code element p is $\{p^1, p^2, p^3, p^4\}$; the second neighborhood code element set is a neighborhood code element set of candidate code elements of any code element in the second image, for example, a candidate code element of the code element p is a code element q, the neighborhood code element set of the code element q is $\{q^1, q^2, q^3, q^4\}$; when there are three candidate code elements of the code element p, for example, $q_i$, i = 1, 2, 3, there are three second neighborhood code element set $\{q_1^1, q_1^2, q_1^3, q_1^4,\}$、 $\{q_2^1, q_2^2, q_2^3, q_2^4,\}$、 $\{q_3^1, q_3^2, q_3^3, q_3^4\}$; and when there are a plurality of code elements p, it is similar to the above case and will not be repeated here.

It should be further noted that, taking the code element p as an example, for each candidate code element $q_i$ of the code element p, i being a positive integer, it is first confirmed whether a code element $p^1$ matches a first neighborhood code element $q_1^1$ of the candidate code element $q_1$; then, all the candidate code elements of the code element p are sequentially retrieved, and it is determined whether the neighborhood code elements of all the candidate code elements match the code element $p^1$, one is added to the data of the matching quantity of the candidate code element matching the code element $p^1$, for example, if the code element $q_1^1$ matches the code element $p^1$, the matching quantity of the candidate code element $q_1$ is one, and if the **code element** $q_1^2$ matches the code element $p^2$, one is added to the matching quantity of the candidate code element $q_1$, and it is two. A candidate code element with the maximum matching quantity is determined as a target code element; taking a code element p as an example, if the candidate code element $q_1$ has the maximum matching quantity with the code element p, the candidate code element $q_1$ is determined as the target code element matching the code element p.

In step S202, a predetermined code element image is generated by means of the following method: determining, on the basis of the length of the target code element, the width of the target code element, the spacing between the target code elements, and the pixel point coordinates of a central pixel point of the target code element, a target region where the target code element is located, wherein the pixel point coordinates of the central pixel point of the target code element are randomly generated in the region where the code element image is located; traversing all pixel points in the target region, and generating the target code element in the target region in cases where there is no described target code element in the target region, wherein the target code element at least includes a line segment of a preset length and two end points corresponding to the line segment of the preset length; and generating the target code element at all the target regions within the code element image region. As shown in Fig. 4, five target code elements are shown, wherein a code element with a sign 1 is composed of a line segment and two circular end points corresponding to the line segment; a code element with a sign 2 is composed of a line segment of a first preset length and two line segments of a second preset length which are used as endpoints, the first preset length being greater than the second preset length; a code element with a sign 3 is composed of a line segment of the first preset length and three line segments of the second preset length which are used as endpoints; a code element with a sign 4 is composed of a line segment and two endpoints of the line segment itself; and a code element with a sign 5 is formed by a line segment intersecting another line segment.

After the projection module and the image acquisition module of the reconstruction system are determined, the amplification factor $\varphi_p$ of the projection device and the amplification factor $\varphi_c$ of the image acquisition module are inherent parameters of the system. Between the unit pixel point length $l_p$ of the code element image and the unit pixel point length $l_c$ of the first image, there is a relationship $l_c = \frac{\varphi_c}{\varphi_p} l_p$. As the minimum length of a unit pixel point of a code element image that the projection device can project is determined as $L_{min}$, the minimum length $L_{min}$ of a stripe in the first image can be determined according to this equation. In order to ensure the randomness of the projection pattern with a width of W and a height of H, the maximum stripe length $L_{max}$ in the pattern does not exceed H/2, and then each stripe length $L_i \in [L_{min}, L_{max}]$.

In particular, the stripe length L in the projection pattern may be a fixed length value or a random length value. If it is a random length value, the length of each stripe can be determined by a pseudo random sequence $\{L_i\}$, and the value range of the pseudo random sequence is $L_i \in [L_{min}, L_{max}]$.

In cases where the first target pixel point is the midpoint of the line segment stripe in the first image, only the midpoint of the line segment stripe in the second image can be matched with the first target pixel point, the midpoint of the line segment stripe in the second image is determined as a second target pixel point, and a correlation coefficient between each second target pixel point and the first target pixel point is directly determined, and the second target pixel point having the maximum correlation coefficient is determined as the matched pixel point of the first target pixel point. The computing amount of pixel points is reduced, thereby improving the matching efficiency.

In some embodiments of the present application, before determining, in the first image, a plurality of candidate code elements corresponding to the target code element in the second image, the method further includes adjusting the first image and the second image to be on the same plane.

It should be noted that, in the field of stereoscopic vision, there is an epipolar constraint relationship between a first image and a second image, that is, feature points located on the same epipolar line in a projected image, and images collected by an image collection device are also located on the same epipolar line. The epipolar lines corresponding to the first image and the second image can be rectified to the same horizontal direction by using the epipolar line rectification principle. After the correction is completed, performing filtering smoothing processing on the first image and the second image includes, but is not limited to, Gaussian filtering.

The first image and the second image are generated by projecting an image to be projected onto the surface of the object to be measured, and the projection parameters of each code element can be determined according to a preset calibration result.

Based on the described method, the present application can realize fast and accurate reconstruction of three-dimensional data of the surface of an object to be measured. The method for reconstructing a center point of a stripe in the present application can realize accurate acquisition of three-dimensional data, and the manner of random stripes increases the number of encoding points (any pixel point in a stripe center is an encoding point), thereby improving data redundancy, and further improving scanning efficiency.

The embodiments of the present application further provide a three-dimensional reconstruction system. As shown in Fig. 5, the system includes: at least two image collection devices 503, a projection device 504 and a first processor 502, wherein the projecting device 504 is configured to project a predetermined code element image onto the surface of an object to be measured; the at least two image acquisition modules 503 are configured to acquire the predetermined code element images from the surface of the object 501 to be measured, so as to obtain a first image and a second image; and the first processor 502 is configured to acquire a first target pixel point of each code element in the first image, and determine, in the second image, a matched pixel point for the first target pixel point of each code element in the first image; and is further configured to determine the three-dimensional coordinates of the first target pixel point according to the image parameters of the first image and the second image which are predetermined, so as to complete three-dimensional reconstruction.

The image collection device 503 includes, but is not limited to, a gray-scale camera and a color camera; the projection modes of the projection device 504 include, but are not limited to, projection modes such as Digital Light Processing (DLP), Mask Projection (MASK), and Diffraction Projection (DOE); and a structured light pattern can be projected. In an optional manner, there may also be a plurality of image collection devices.

In an optional manner, the code element images may be pre-generated by the first processor 502 and transmitted into the projection device 504; the projection device 504 projects a code element image onto the surface of the object 501 to be measured; then the two image collection devices 503 respectively collect the first image and the second image, and transmit same to the first processor 502 for code element matching; and after code element matching is completed, the three-dimensional coordinates of each code element in the first image are determined, so as to complete three-dimensional reconstruction.

In some embodiments of the present application, a generation instruction may be inputted on an interaction device connected to the first processor 502; a code element image may be displayed in a display interface; the displayed code element image may also be modified; meanwhile, various data in the reconstruction process may also be displayed on the interaction device, so as to perform real-time monitoring.

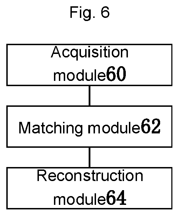

Some embodiments of the present application further provides a model training device, as shown in Fig. 6, comprising: an acquisition module 60, configured to acquire a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes; a matching module 62 configured to acquire a first target pixel point of each code element in the first image, and determine, in the second image, a matched pixel point for the first target pixel point of each code element in the first image; and a reconstruction module 64, configured to determine the three-dimensional coordinates of the first target pixel point according to the image parameters of the first image and the second image which are predetermined, so as to complete three-dimensional reconstruction.

The matching module 62 includes: a first determination sub-module, the first determination sub-module being configured to determine the pixel point coordinates of the first target pixel point and a grayscale value of the first target pixel point; determine a first region with a preset area in the first image, and take a central point of the first region as the first target pixel point; determine a second region with the preset area from the second image, wherein the longitudinal coordinate of the center of the second region in the second image is the same as the longitudinal coordinate of the center of the first region in the first image; and determine, from the second region, matched pixel points matching the first target pixel point.

The first determination sub-module includes: a first determination unit and a second determination unit, wherein the first determination unit is configured to determine a correlation coefficient of each pixel point in the second region one by one; the correlation coefficient is configured to represent the correlation between a pixel point in a second region and a first target pixel point; the pixel point with the maximum correlation coefficient in the second region is determined as a matched pixel point; the second determination unit is configured to determine an average gray-scale value of all pixel points in the first region as a first average gray-scale value, and determine an average gray-scale value of all pixel points in the second region as a second average gray-scale value; and determine a correlation coefficient between each pixel point in the second region and the first target pixel point according to a difference between the gray-scale value of the first target pixel point in the first region and the first average gray-scale value and a difference between the gray-scale value of each pixel point in the second region and the second average gray-scale value.

The first determination unit includes: a determination sub-unit configured to determine a pixel point having the maximum correlation coefficient in the second region as a candidate matched point; and in cases where the candidate matched point overlaps the second target pixel point in the second image, determine the candidate matched point as the matched pixel point. In cases where the candidate matched point does not overlap the second target pixel point in the second image, the second target pixel in a preset range around the candidate matched point is determined as the matched pixel point.

The matching module 62 further includes: a matching sub-module configured to determine a plurality of first target pixel points in the first image and a plurality of second target pixel points in the second image; and match the plurality of first target pixel points with the plurality of second target pixel points in the second image on a one-to-one basis.

According to another aspect of the embodiments of the present application, also provided is a non-transitory storage medium, wherein the non-transitory storage medium includes a stored program, and when the program runs, a device where the non-transitory storage medium is located is controlled to execute the three-dimensional reconstruction method.

According to another aspect of the embodiments of the present application, also provided is a processor, the processor is configured to run a program, wherein the program executes the described three-dimensional reconstruction method when running.

The processor is configured to run a program for executing the following functions: acquiring a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes; acquiring a first target pixel point of each code element in the first image, and determining, in the second image, a matched pixel point for the first target pixel point of each code element in the first image; and determining the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

The processor executes the three-dimensional reconstruction method, and the purpose of replacing an encoding mode of a feature point of a code element is realized by an encoding method for determining matched pixel points of a first target pixel point of each code element in a first image in a second image, so as to achieve the technical effect of improving the matching accuracy rate of the code element, thereby solving the technical problem of low accuracy of matching a code element according to a feature point of the code element due to an unclear image.

In the described embodiments of the present application, the description of each embodiment has its own emphasis. For the part not detailed in a certain embodiment, please refer to the relevant description in other embodiments.

In the several embodiments provided in the present application, it should be understood that the disclosed technical content may be implemented in other manners. The apparatus embodiment described above is only schematic. For example, the division of the unit can be logical functional division, and there can be other division methods in the actual implementation, for example, multiple units or components can be combined or integrated into another system, or some features can be ignored or not executed. In addition, the mutual coupling or direct coupling or communication connection shown or discussed may be indirect coupling or communication connection through some interfaces, units or modules, and may be in the form of electricity or other forms.

The units described as separate components may or may not be physically separated, and the components displayed as units may or may not be physical units, that is, may be located in one place, or may be distributed to a plurality of units. Some or all units can be selected according to the actual needs to achieve the purpose of the solutions of the embodiments.

In addition, functional units in the embodiments of the present disclosure may be integrated into one processing unit, or the units may exist alone physically, or two or more units are integrated into one unit. The integrated unit may be implemented in the form of hardware, and may also be implemented in the form of a software functional unit.

If the integrated unit is implemented in the form of a software functional unit and is sold or used as an independent product, the integrated unit can be stored in a computer-readable storage medium. On the basis of such understanding, the part of the technical solution of the present application that contributes in essence or to the related art or all or part of the technical solution may be embodied in the form of a software product stored in a storage medium. Several instructions are included in the storage medium to enable a computer device (which may be a personal computer, server or network device, etc.) to execute all or some of the steps of the methods of various embodiments of the present application. The foregoing storage medium includes: media such as a USB flash disk, a Read-Only Memory (ROM), a Random Access Memory (RAM), a removable hard disk, a magnetic disk, or an optical disk, and the like which can store program codes.

The description above only relates to preferred embodiments of the present application. It should be noted that for a person of ordinary skill in the present technical field, several improvements and modifications can also be made without departing from the principle of the present application, and these improvements and modifications shall also be considered as within the scope of protection of the present application.

Industrial Applicability

The technical solutions provided in the embodiments of the present application can be applied to the field of three-dimensional reconstruction. In the embodiments of the present application, acquiring a first image and a second image, wherein the first image and the second image are respectively obtained by different image acquisition devices acquiring a predetermined code element image projected onto a surface of an object to be measured, a predetermined code element image contains a plurality of target code elements which are randomly distributed according to a preset direction, and the target code elements are line segment stripes; acquiring a first target pixel point of each code element in a first image, and determining a matched pixel point of the first target pixel point of each code element in the first image in a second image; determining three-dimensional coordinates of a first target pixel point at least according to a predetermined pixel point coordinate of the first target pixel point in a first image and a pixel point coordinate of a matched pixel point in a second image, in order to complete a three-dimensional reconstruction mode, determining an encoding mode for matched pixel points of a first target pixel point of each code element in a first image in a second image, thereby achieving the purpose of replacing an encoding mode of a feature point of a code element, so as to achieve the technical effect of improving the matching accuracy rate of the code element, thereby solving the technical problem of low accuracy of matching a code element according to a feature point of the code element due to an unclear image.

**Claims**

1. A method for three-dimensional reconstruction, comprising:

   acquiring a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes;
   acquiring a first target pixel point of each code element in the first image, and determining, in the second image, a matched pixel point for the first target pixel point of each code element in the first image; and
   determining the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

2. The method as claimed in claim 1, wherein determining, in the second image, the matched pixel point for the first target pixel point of each code element in the first image comprises:

   determining the pixel point coordinates of the first target pixel point and a gray-scale value of the first target pixel point;
   determining a first region with a preset area in the first image, and taking a central point of the first region as the first target pixel point;

determining a second region with the preset area from the second image, wherein the longitudinal coordinate of the center of the second region in the second image is the same as the longitudinal coordinate of the center of the first region in the first image; and

determining, from the second region, matched pixel points matching the first target pixel point.

3. The method as claimed in claim 2, wherein determining, from the second region, matched pixel points matching the first target pixel point comprises:

determining the correlation coefficient of each pixel point in the second region one by one, the correlation coefficient being used for representing a correlation between a pixel point in the second region and the first target pixel point; and

determining a pixel point having the maximum correlation coefficient in the second region as the matched pixel point.

4. The method as claimed in claim 3, wherein determining the correlation coefficient of each pixel point in the second region one by one comprises:

determining an average gray-scale value of all pixel points in the first region as a first average gray-scale value, and determining an average gray-scale value of all pixel points in the second region as a second average gray-scale value; and

determining a correlation coefficient between each pixel point in the second region and the first target pixel point according to a difference between the gray-scale value of the first target pixel point in the first region and the first average gray-scale value and a difference between the gray-scale value of each pixel point in the second region and the second average gray-scale value.

5. The method as claimed in claim 3, wherein determining the pixel point having the maximum correlation coefficient in the second region as the matched pixel point comprises:

determining a pixel point having the maximum correlation coefficient in the second region as a candidate matched point;

in cases where the candidate matched point overlaps the second target pixel point in the second image, determining the candidate matched point as the matched pixel point; and

in cases where the candidate matched point does not overlap the second target pixel point in the second image, determining the second target pixel in a preset range around the candidate matched point as the matched pixel point.

6. The method as claimed in claim 1, wherein the predetermined code element image comprise a plurality of target code elements that are randomly distributed in a preset direction, the target code elements being line segment stripes; comprises:

determining, on the basis of the length of the target code element, the width of the target code element, the spacing between the target code elements, and the pixel point coordinates of a central pixel point of the target code element, a target region where the target code element is located, wherein the pixel point coordinates of the central pixel point of the target code element are randomly generated in the region where the code element image is located;

traversing all pixel points in the target region, and generating the target code element in the target region in cases where there is no described target code element in the target region, wherein the target code element at least comprises a line segment of a preset length and two end points corresponding to the line segment of the preset length; and

generating the target code element at all the target regions within the code element image region.

7. The method as claimed in claim 1, wherein the method further comprises:

determining a first neighborhood code element set of any code element in the first image and a plurality of second neighborhood code element set of a plurality of candidate code elements in the second image;

determining the number of matched neighborhood code elements in the plurality of second adjacent code element sets and the number of matched neighborhood code elements in the first neighborhood code element set, and determining, as a target second neighborhood code element set, a second neighborhood code element set having the maximum number of matched neighborhood code elements in the plurality of second neighborhood code element sets; and

determining the candidate code element corresponding to the target second neighborhood code element set as the target code element.

8. The method as claimed in claim 1, wherein the method further comprises:

determining a plurality of first target pixel points in the first image and a plurality of second target pixel points in the second image; and

matching the plurality of first target pixel points with the plurality of second target pixel points in the second image on a one-to-one basis.

9. An apparatus for three-dimensional reconstruction, comprising:

an acquisition module, configured to acquire a first image and a second image, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes;

a matching module configured to acquire a first target pixel point of each code element in the first image, and determine, in the second image, a matched pixel point for the first target pixel point of each code element in the first image; and

a reconstruction module, configured to determine the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

10. A system for three-dimensional reconstruction, comprising:

at least two image collection devices, a projection device and a first processor, wherein

the projecting device is configured to project a predetermined code element image onto the surface of an object to be measured;

the at least two image acquisition modules are configured to acquire the predetermined code element images from the surface of the object to be measured, so as to obtain a first image and a second image; and

the first processor is configured to acquire a first target pixel point of each code element in the first image, and determine, in the second image, a matched pixel point for the first target pixel point of each code element in the first image; and is further configured to determine the three-dimensional coordinates of the first target pixel point at least according to the predetermined pixel point coordinates of the first target pixel point in the first image and the predetermined pixel point coordinates of the matched pixel point in the second image, so as to complete three-dimensional reconstruction.

11. A non-transitory storage medium comprising a stored program, when the program runs, a device where the non-transitory storage medium is located is controlled to execute the method for three-dimensional reconstruction as claimed in any one of claims 1 to 8.

12. An electronic device, comprising a memory and a processor, the processor being configured to run the program, wherein the program, when running, executes the method for three-dimensional reconstruction as claimed in any one of claims 1 to 8.

Fig. 1

computer terminal 10

Processor 102a

Processor 102b

......

Processor 102n

BUS

Memory 104

Program instruction

Data storage device

Transmission module106

Input/Output Interface

Wired and/or wireless network connection

Cursor control device

Keyboard

Display

Fig. 2

A first image and a second image is acquired, wherein the first image and the second image are respectively obtained by means of different image collection devices collecting a predetermined code element image projected onto the surface of an object to be measured, the predetermined code element image comprising a plurality of target code elements that are randomly distributed in a preset direction, and the target code elements being line segment stripes

S202

A first target pixel point of each code element in the first image is acquired, and a matched pixel point for the first target pixel point of each code element in the first image is determined in the second image

S204

The three-dimensional coordinates of the first target pixel point at least is determined according to the predetermined pixel point coordinates of the first target pixel point in the first image and the predetermined pixel point coordinates of the matched pixel point in the second image, so as to complete three-dimensional reconstruction

S206

Fig. 3

Fig. 4

1  2  3  4  5

Fig. 5

Fig. 6

```
┌─────────────────────────────┐
│      Acquisition            │
│      module60               │
└─────────────────────────────┘
              │
┌─────────────────────────────┐
│    Matching module62        │
└─────────────────────────────┘
              │
┌─────────────────────────────┐
│     Reconstruction          │
│       module64              │
└─────────────────────────────┘
```

## INTERNATIONAL SEARCH REPORT

| International application No. |
| --- |
| **PCT/CN2023/112049** |

**A. CLASSIFICATION OF SUBJECT MATTER**

G06T17/00(2006.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI; 必应, BING; 百度, BAIDU: 三维重建, 投射, 码元, 随机分布, 线段条纹, 匹配, 像素点, 三维坐标, 结构光, 3D reconstruction, project, code element, random distribution, line strip, match, pixel point, 3D coordinator, structured light

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115345995 A (SHINING 3D TECH CO., LTD.) 15 November 2022 (2022-11-15) claims 1-12, and description, paragraphs 29-86 | 1-12 |
| Y | CN 108267097 A (HANGZHOU SHINING 3D TECH CO., LTD.) 10 July 2018 (2018-07-10) description, paragraphs 34-99 | 1, 6-12 |
| Y | CN 108151671 A (HANGZHOU SHINING 3D TECH CO., LTD.) 12 June 2018 (2018-06-12) description, paragraphs 36-64 | 1, 6-12 |
| Y | CN 101908230 A (SOUTHEAST UNIVERSITY) 08 December 2010 (2010-12-08) description, paragraphs 42-55 | 1, 6-12 |
| A | CN 108122254 A (SHENZHEN INSTITUTES OF ADVANCED TECHNOLOGY, CHINESE ACADEMY OF SCIENCES) 05 June 2018 (2018-06-05) entire document | 1-12 |
| A | US 9325973 B1 (HAZEGHI, Aryan et al.) 26 April 2016 (2016-04-26) entire document | 1-12 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2023** | **26 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/112049** |

### C. DOCUMENTS CONSIDERED TO BE RELEVANT

| Category* | Citation of document, with indication, where appropriate, of the relevant passages | Relevant to claim No. |
| --- | --- | --- |
| A | MAURICE, Xavier et al. "Epipolar Based Structured Light Pattern Design for 3-D Reconstruction of Moving Surfaces" *2011 IEEE International Conference on Robotics and Automation,* 18 August 2011 (2011-08-18), pages 5301-5308 | 1-12 |

Form PCT/ISA/210 (second sheet) (July 2022)

**INTERNATIONAL SEARCH REPORT**
Information on patent family members

International application No.

**PCT/CN2023/112049**

| Patent document cited in search report | | | Publication date (day/month/year) | Patent family member(s) | | | Publication date (day/month/year) |
|---|---|---|---|---|---|---|---|
| CN | 115345995 | A | 15 November 2022 | None | | | |
| CN | 108267097 | A | 10 July 2018 | CN | 108267097 | B | 10 July 2020 |
| CN | 108151671 | A | 12 June 2018 | WO | 2018103152 | A1 | 14 June 2018 |
| | | | | CN | 108151671 | B | 25 October 2019 |
| CN | 101908230 | A | 08 December 2010 | CN | 101908230 | B | 23 November 2011 |
| CN | 108122254 | A | 05 June 2018 | CN | 108122254 | B | 22 June 2021 |
| | | | | WO | 2019113912 | A1 | 20 June 2019 |
| US | 9325973 | B1 | 26 April 2016 | US | 9521399 | B1 | 13 December 2016 |

Form PCT/ISA/210 (patent family annex) (July 2022)

**REFERENCES CITED IN THE DESCRIPTION**

**Patent documents cited in the description**

- CN 202210956350X